# EUROPEAN PATENT SPECIFICATION

(11) **EP 4 348 569 B1**
(45) Date of publication and mention of the grant of the patent: **02.04.2025**
(21) Application number: 22726220.1
(22) Date of filing: 05.05.2022
(51) Int. Cl.: G06T 5/50, G06T 5/60, G06T 5/94

(54) **GLARE REMOVAL USING DUAL CAMERAS**
ENTFERNUNG VON BLENDEFFEKTEN MITTELS ZWEIER KAMERAS
SUPPRESSION DES REFLETS À L'AIDE DE DEUX CAMÉRAS

(30) Priority: 31.05.2021 IN 202141024176; 28.06.2021 US 202117360844
(43) Date of publication of application: 10.04.2024
(73) Proprietor: Microsoft Technology Licensing, LLC, Redmond, WA 98052-6399 (US)
(72) Inventor: NANJEGOWD, Chandrasekhar, Redmond, Washington 98052-6399 (US); DSOUZA, Vivian, Redmond, Washington 98052-6399 (US)
(74) Representative: Goddar, Heinz J.
(86) International application number: PCT/US2022/027741
(87) International publication number: WO 2022/256109

(56) References cited:
- WO-A1-2020/237931
- US-A1- 2010 290 703
- US-A1- 2017 330 053
- US-A1- 2019 102 872
- US-A1- 2021 044 736
- WANG XIAOXIA ET AL: "Detection and Inpainting of Specular Reflection in Colposcopic Images with Exemplar-based Method", 2019 IEEE 13TH INTERNATIONAL CONFERENCE ON ANTI-COUNTERFEITING, SECURITY, AND IDENTIFICATION (ASID), IEEE, 25 October 2019 (2019-10-25), pages 90 - 94, XP033670714, DOI: 10.1109/ICASID.2019.8925202

## Description

### BACKGROUND

When a camera is used to capture video or take a photo, any presence of an active light source or high-intensity specular reflection from an object in the scene can cause an over-exposed region, called glare, which results in distortion of pixels and loss of detail in the image(s). One approach to addressing this problem involves taking images of the scene from two or more different perspectives, and post-processing the images to create a composite image from which the glare is removed, taking advantage of the fact that the glare caused by a given light source or specular reflection will occur at different locations in the images. The different images may be taken simultaneously with multiple cameras. Alternatively, if the image is to be taken of a still scene or object, the images may be taken sequentially with the same camera, moved to different locations and/or orientations relative to the scene. In a variation of this approach, it is also possible, in some application contexts, to take multiple images with the same camera perspective, but with the scene under illumination from different angles. Solutions that rely on sequentially taken images are generally inapplicable to glare removal from video of moving objects. Even if multiple cameras are used to image the scene from multiple angles simultaneously, the subsequent image processing is computationally expensive, which severely limits its feasibility for glare removal in real-time applications.

US 2010/290703 A1 discloses a method according to the preamble of claim 1 and a system according to the preamble of claim 10.

US 2021/0044736 A1 discloses an image processing apparatus. An acquisition unit acquires a first image captured with visible light and a second image captured with non-visible light. A correction unit corrects luminance of the second image so as to bring luminance distribution of the second image close to luminance distribution of the first image. A generation unit combines the second image whose luminance is corrected by the correction unit and chromaticity information of the first image to generate a composite image.

US 2017/330053 A1 relates to a color night vision system and operation method thereof. The color night vision system includes a single-4-color image sensor configured to acquire a red, green, blue (RGB) image and an infrared (IR) image by processing RGB light signals and an IR light signal for each wavelength, and a processor configured to determine an exposure state of the RGB image by analyzing a brightness distribution of the RGB image, to decide at least one of an exposure compensation level of the RGB image, a denoising level of the RGB image, or a synthesis ratio between the RGB image and the IR image based on the determination result, and to create an output image based on the decision result that is made using the RGB image and the IR image.

WO 2020/237931 A1 is directed to systems and methods for image processing. The system may obtain low-frequency component of a first image. For each element of the first image, the system may adjust a luminance of the element in response to determining that the luminance of the element is less than a predetermined luminance threshold. The system may determine a first luminance weight map corresponding to the first image based on the adjusted luminance of each element of the first image. The system may obtain the low-frequency component of a second image and determine a second luminance weight corresponding to the second image based on the luminance of each element of the second image. The system may further determine a fused image based on the low-frequency component of the first image, the first luminance weight map, the low-frequency component of the second image, and the second luminance weight map.

US 2019/102872 A1 discloses glare reduction in captured images. Techniques to improve the quality of captured images by reducing the effects of undesired objects are disclosed. The technique may involve the use of face detection to localize the likely position of screen glare within the captured images, as well as an awareness of the content that is being displayed in a display screen at the moment of capture of the respective image. The technique may then model the position, size, and/or distortion of the screen contents (or other projected lights) reflected by the user's eyeglasses (or other reflective surface the captured seen environment). Once the experience of the undesired screen glare has been modeled in the captured image, the techniques may perform an image modification operation to remove or reduce the undesired glare from the originally-acquired image in an efficient manner.

Wang et al.:"Detection and Inpaiting of Specular Reflection in Colposcopic Images with Exemplar-based Method", 2019 IEEE 13th Internationally Conference on Counterfeiting, Security and Identification (ASID), IEEE, 25 October 2019, pages 90-94, XP033670714, relates to detection and inpainting of specular reflection in colposcopic images with exemplar-based method.

### BRIEF DESCRIPTION OF THE DRAWINGS

Various systems and methods for glare removal from images are described herein with reference to the accompanying drawings, in which:
FIG. 1 is a flow diagram illustrating a method for generating glare-free images based on pairs of red-green-blue (RGB) and infrared (IR) images, in accordance with various embodiments;
FIG. 2 is a schematic depiction of an image processing method for glare removal from an RGB image using an IR image, as may be employed in the method of FIG. 1, in accordance with various embodiments;
FIG. 3 is a schematic diagram illustrating a system architecture for generating glare-free images in accordance with various embodiments; and
FIG. 4 is a block diagram of an example machine with which glare removal in accordance with various embodiments may be performed.

### DESCRIPTION

Described herein are systems and methods to automatically remove glare from images captured with an RGB camera based on images simultaneously acquired with an IR camera. The disclosed approach exploits the fact that IR cameras do not capture light in the visible spectrum, and the IR images, therefore, do not include glare. A system for glare removal in accordance with various embodiment includes dual RGB and IR cameras that overlap in their respective fields of view and can be operated to simultaneously capture a pair of images of a scene, with associated electronic circuitry that processes the raw image data read out from the image sensors of the RGB and IR cameras to generate output images having the same field of view and the same resolution. Further, the system includes computing hardware and/or software that, after conversion of the RGB image to YUV format, processes the Y plane of the YUV image to detect any glare present in the image and identify its contours, which define the "glare region of interest (glare ROI)" or simply "glare region;" substitutes the glare ROI in the Y plane with the pixel values of a corresponding region in the IR image to remove the glare artifact; and (optionally) adjusts the color information of the pixels in the glare ROI based on the UV planes of the original YUV image. For example, the color information in the pixels surrounding the glare region can be averaged or extrapolated to determine the color information within the glare region. Alternatively, in some instances, the original UV plane values may be used as is.

The proposed approach lends itself to computationally efficient implementations that facilitate glare removal in real time, e.g., within 30 ms or less. Accordingly, glare removal in accordance herewith can be applied to video streams, for instance, to improve the user experience during video calls or video recording under various lighting conditions, or to improve the video provided by dashboard and other vehicle camera systems, to name just a couple of examples.

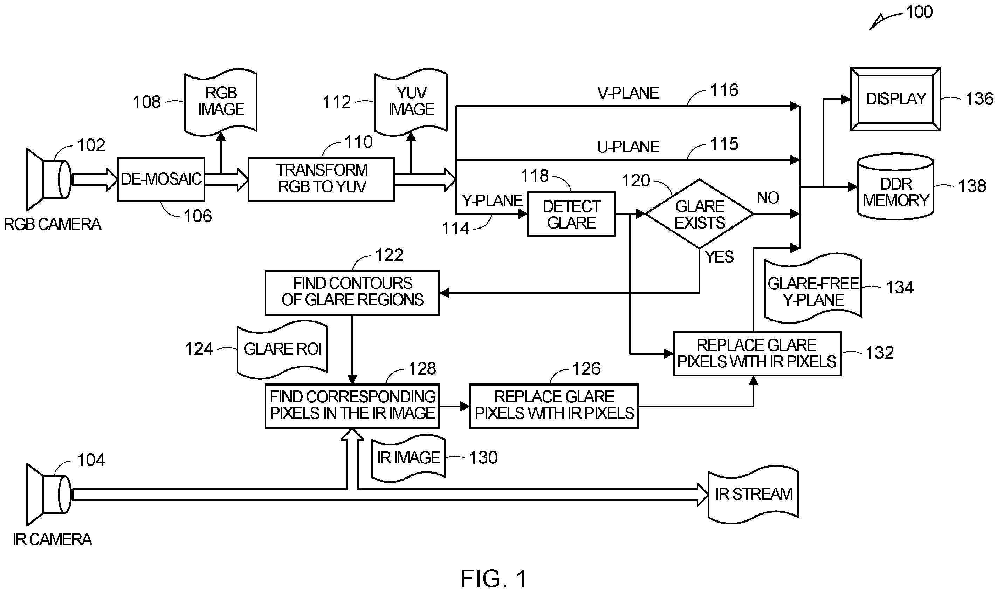

FIG. 1 is a flow diagram illustrating a method 100 for generating glare-free images based on pairs of RGB and IR images, in accordance with various embodiments. Two digital cameras, an RGB camera 102 capturing light in the visible wavelength range and an IR camera 104 capturing light in the infrared wavelength range, simultaneously acquire a pair of images of a scene. The pair of images may be, e.g., synchronized frames within video streams produced by the cameras 102, 104. The RGB camera 102 may include an image sensor overlaid with a color filter array (CFA); in this case, the image processing pipeline involves "de-mosaicing" the sensor output (act 106), that is, digitally processing it based on the CFA to construct a full color image, or RGB image, 108. The RGB image 108 is further transformed (in act 110) to a YUV image 112, which represents the image in terms of a luminance (physical brightness) component Y (114) and two chrominance components U (blue projection) and V (red projection) (115 and 116).

Glare removal operates on the Y component, or Y plane 114, of the YUV image 112. As shown, the method 100 involves determining whether glare exists in the Y plane 114 (act 118), and if so (as decided at 120), identifying the contours of the glare region (act 122). Glare detection can generally be performed either by traditional, explicit image processing algorithms, or by machine learning models. Traditional algorithms usually rely on statistically defined thresholds and blob sizes to classify an image region as glare or not glare. Often, these algorithms identify glare regions of certain pre-defined shapes (e.g., circle, square, rectangle), which limits detection accuracy and can result in both false negatives (missed glare regions) and false positives (non-glare regions erroneously classified as glare). With machine learning models, the threshold and blob sizes are not statistically predefined, but tuned automatically based on the data. In addition, certain parameters of the machine learning model can be fine-tuned based on additional data even after deployment. In an example embodiment, a convolutional neural network (CNN) is employed to determine which pixels within the image are within the glare region. Note that, although glare detection and identification of the glare region are conceptually depicted in FIG. 1 as two separate steps 118, 122, they may, in some embodiments, constitute a single operation that identifies any glare region(s), thereby inherently determining whether glare exists in the images.

Once the glare ROI 124 has been identified within the Y plane 114 of the YUV image 112, a corresponding region of pixels 126 is identified (in act 128) in the IR image 130. For computational simplicity, the determination of corresponding pixels is generally performed on a pair of an RGB/YUV image 108/112 and an IR image 130 that have been pre-processed, e.g., using spatial transformation and cropping, to share a common field of view and the same resolution. The pixels values in the glare region 124 of the Y plane are then replaced with the pixel values of the corresponding region 126 within the IR image 130 (act 132), resulting in a glare-free Y-plane 134. Further, the corrected, glare-free Y plane 134 is recombined with the chrominance components, that is, the UV planes 115, 116. In some embodiments, the color information within the glare ROI is adjusted based on the color values surrounding the glare ROI, taking advantage of the fact that color tends to be highly correlated (with neighboring pixels often having the same color value). For example, for glare regions including relatively few contiguous pixels, the UV pixel values within the glare region of the YUV image may be replaced by an average over UV pixel values of pixels surrounding the glare region (e.g., a weighted average, with weights being larger for pixels from the surroundings that are closer to a given pixel in the glare region). For larger glare regions, the UV planes may be fitted in the areas surrounding the glare region and extrapolated into the glare region. The glare-free image composed of the luminance information of the glare-free Y plane 134 and the chrominance information of the (e.g., color-adjusted) UV planes 115, 116 may be sent to a display device 136 (e.g., a computer screen, phone screen, or video display screen in a vehicle) and/or stored in memory 138. If no glare is detected in the Y plane (as determined at 120), the Y plane 114 and the UV planes 115, 116 are used as is in the stored or displayed image.

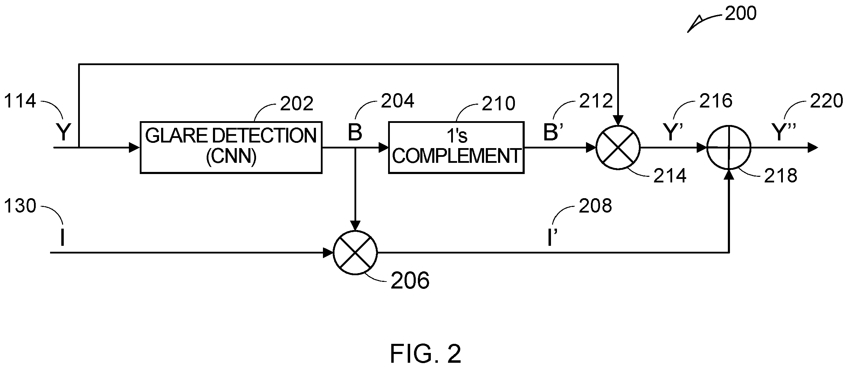

FIG. 2 is a schematic depiction of an image processing method 200 for glare removal from an RGB image using an IR image, as may be employed in the method 100 of FIG. 1, in accordance with various embodiments. The Y plane 114 from the RGB camera is input to a glare detection algorithm 202 that classifies every pixel as either a glare pixel or a normal pixel, creating a binary bit map (B) 204 where each glare pixel takes a value of one and each normal pixel takes a value of zero. As will be appreciated, the bit map 204 both reflects whether there is any glare in the image, and if there is, inherently defines the glare region. Thus, the glare detection algorithm 202 combines glare detection and identification of the glare region and its contours in one step.

The glare detection algorithm 202 may be explicitly programmed, or implemented by a machine learning model. In the latter case, the machine learning model may be, for instance, a neural network model such as a CNN or a fully connected network. CNNs, which are generally well-suited for image processing tasks, are particularly beneficial to implement the glare detection algorithm 202 in that they can provide high accuracy and performance. Neural network models for glare detection can be trained, e.g., in a supervised manner based on training data that includes many pairs of a Y plane and its corresponding binary bit map, with bit maps generated, e.g., manually by a user identifying the glare region contours in the image. As is known in the art, training the neural network involves iteratively adjusting network weights to optimize a cost function measuring the discrepancy between the output of the model (in this case, a binary bit map) and the ground-truth output provided with the training data (e.g., the manually generated binary bit map); a widely used algorithm for this optimization is backpropagation of errors. Once the binary bit map 204, which inherently identifies the glare region in the Y plane of the YUV image, has been generated, the corresponding region in the IR image (I) 130 can be identified by multiplying the IR image, at 206, with the binary bit map 204. This operation generates an intermediate image (I') 208 in which all pixel values except in the glare region are zero. In the glare region, the intermediate image 208 has the same pixel values as the IR image 130 from which it is computed. Further, in act 210, the binary bit map 204 is inverted by forming its 1's complement (B') 212, which is zero for all pixels within the glare region and one for all pixels outside the glare region. The Y plane 114 of the YUV image is multiplied, at 214, with the 1's complement 212 of the binary bit map 204. This operation generates another intermediate image (Y') 216, in which pixel values corresponding to the glare region become zero. The two intermediate images 208, 216 are added, at 218, to generate a single modified Y plane (Y") 220 free of glare pixels, in which the glare pixels of the original Y plane 114 have been substituted by corresponding pixel values of the IR image 130.

The method 200, in an efficient implementation, can be computationally fast, allowing glare to be removed from an RGB image stream in real time, that is, within a timeframe that is unnoticeable to a human consumer of a video stream. For example, video captured at a frame rate of thirty frames per second (or more), corresponding to a new video frame every 33 milliseconds, is perceived by humans as continuous video. In various embodiments, the glare removal process is completed within less than 33 milliseconds, which enables producing glare-free video frames at the rate at which raw video frames are acquired.

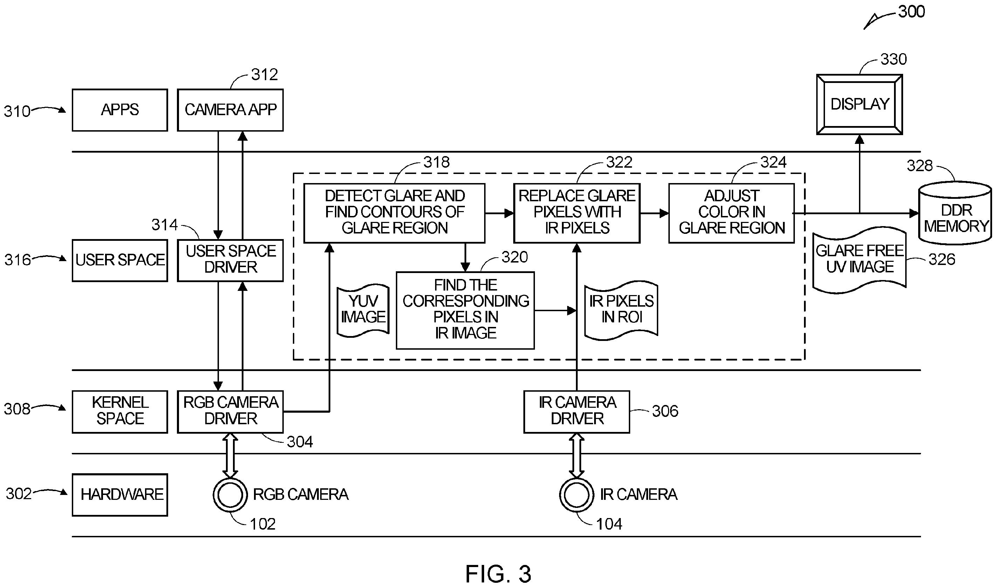

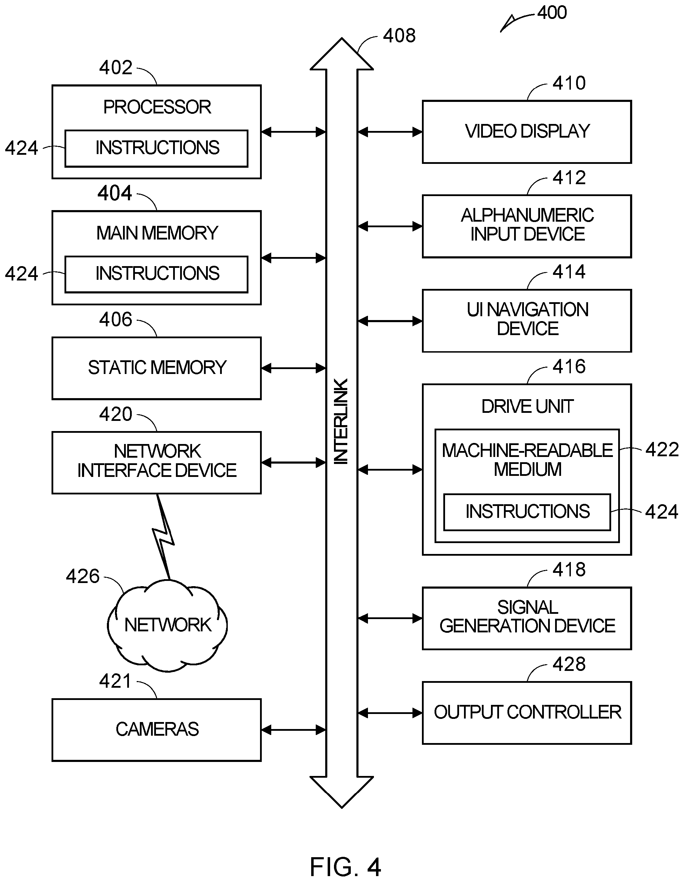

FIG. 3 is a schematic diagram illustrating a system architecture for generating glare-free images in accordance with various embodiments. The system 300 may be implemented by a computing machine, e.g., as depicted schematically in FIG. 4, that includes one or more hardware processors (e.g., one or more central processing units (CPUs) and/or graphic processing units (GPUs)), memory storing program instructions for execution by the processor(s) (including an operating system and one or more software applications), and various peripheral hardware devices, including, e.g., user input/output devices (such as a keyboard or touchpad, display device, or touch screen) and cameras. The computing machine may be, for example and without limitation, a personal desktop or laptop computer, tablet, or smartphone.

At the hardware level 302, the system 300 includes an RGB camera 102 and an IR camera 104. The cameras 102, 104 generally have an associated digital signal processor (DSP), more specifically an image signal processor (ISP), that pre-processes the image sensor signals, e.g., to perform the de-mosaicing of RGB images, noise reduction, and the like. In dual-camera systems, pre-processing may also involve the image transformation and cropping operations used to create a pair of images with the same resolution and field of view. The cameras 102, 104 have respective associated camera device drivers 304, 306, which generally run in the kernel space 308 of the operating system. At the application level 310, the system 300 runs a software application 312 that provides video capabilities via access to the RGB camera 102; hereinafter, such an application is also referred to as a camera application 312. The camera application 312 may, for instance, be an online collaboration platform, such as Microsoft^{®} Teams, that enables video calls. As another example, the camera application 312 may be a special smartphone app dedicated to taking pictures and recording video. The camera application 312 communicates with a user space driver 314 in the user space 316 of the operating system. The user space driver 314, in turn, communicates with the camera device drivers 304, 306.

In the depicted example, glare removal is implemented in the user space 316. That is, the user space driver 314 includes processing components, operating on pre-processed YUV and IR images received from the RGB and IR camera drivers 304, 306, to detect and find the contours of any glare region(s) in the Y plane of the YUV image (driver component 318) and find the corresponding pixels in the IR image (driver component 320), replace the glare pixel values in the Y plane with the corresponding IR pixel values (driver component 322), and adjust the color information of the substituted pixels based on chrominance components of the YUV image in the glare region (driver component 324). The glare-free, color-adjusted YUV image 326 can then be stored in memory 328 (e.g., double data rate (DDR) random-access memory) allocated to the camera application 312, and/or output, by the camera application 312, to a hardware display device 330.

As will be readily appreciated by those of ordinary skill in the art, the glare removal functionality can generally be implemented both in the user space 316 or, alternatively, in the kernel space 308. Implementation as part of the user space driver 314, as illustrated in FIG. 3, is beneficial in that it insulates the kernel space 308 from any errors that may occur during glare removal, and thus avoids the need for a system restart or reloading of the camera device drivers 304, 306 in case of an error.

It is also possible, in an alternative embodiment, to provide for glare removal at the hardware level 302 in an ISP, e.g., as part of a system-on-chip (SoC) for a dual-camera system. For example, various existing dual-camera systems already perform image alignment between two images in the ISP (to obtain images having a shared field of view). For example, the Snapdragon^{™} SoC from Qualcomm^{®} has an on-chip ISP, Spectra 580, which supports dual-camera systems. The Exynos^{®} SoC from Samsung^{®} also supports dual camera systems. In accordance with various embodiments, these and similar systems, if used with RGB and IR cameras, may be enhanced by further processing the images in the ISP to remove glare from the RGB images.

In yet another embodiment, glare removal as described herein (e.g., with reference to FIG. 2) may be implemented in software at the application level 310. This approach allows for the use of two individual cameras (one RGB and one IR camera), in place of a combined dual-camera system. Image processing software may receive raw YUV and IR data from the two cameras, and process them as needed to achieve the same resolution and a common field of view. For example, the image processing software may utilize image registration techniques to identify corresponding pixels in the two images. The image-processing method 200 for glare removal may then be applied to the properly aligned images.

Software implementation in principle also enables remote, cloud-based glare removal. For example, images from the RGB and IR cameras of a device connected to the Internet via a suitable wired or wireless communication channel may be sent to a remote server computer for glare removal, and the server may then return the processed, glare-free image. Such remote glare removal can be used when post-processing images, absent stringent time constraints. When processing video streams in real time, remote processing is feasible if communication rates are sufficient for real-time image transfer back and forth between the camera-equipped device and the server computer.

FIG. 4 is a block diagram of an example machine 400 with which glare removal in accordance with various embodiments may be performed. The machine may implement, in whole or in part, the method 100, including the example image processing method 200, and may form all or part of the system 300. In alternative embodiments, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environment. The machine 400 may be a personal computer (PC), a tablet PC, a set-top box (STB), a personal digital assistant (PDA), a mobile telephone, a smartphone, a web appliance, a network router, switch or bridge, a server computer, a database, conference room equipment, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The machine 400 may further include a display unit 410, an alphanumeric input device 412 (e.g., a keyboard), and a user interface (UI) navigation device 414 (e.g., a mouse). In an example, the display unit 410, input device 412 and UI navigation device 414 may be a touch screen display. The machine 400 may additionally include a storage device (e.g., drive unit) 416, a signal generation device 418 (e.g., a speaker), and a network interface device 420. Further, the machine 400 includes two or more cameras 421 to acquire still images or video. The machine 400 may include an output controller 428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 416 may include a machine-readable medium 422 on which are stored one or more sets of data structures or instructions 424 (e.g., software) embodying or utilized by any one or more of the techniques or functions described herein. The instructions 424 may also reside, completely or at least partially, within the main memory 404, within static memory 406, or within the hardware processor 402 during execution thereof by the machine 400. In an example, one or any combination of the hardware processor 402, the main memory 404, the static memory 406, or the storage device 416 may constitute machine-readable media.

While the machine-readable medium 422 is illustrated as a single medium, the term "machine-readable medium" may include a single medium or multiple media (e.g., a centralized or distributed database, and/or associated caches and servers) configured to store the one or more instructions 424.

The term "machine-readable medium" may include any medium that is capable of storing, encoding, or carrying instructions for execution by the machine 400 and that cause the machine 400 to perform any one or more of the techniques of the present disclosure, or that is capable of storing, encoding or carrying data structures used by or associated with such instructions. Nonlimiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magnetooptical disks; Random Access Memory (RAM); Solid State Drives (SSD); and CD-ROM and DVD-ROM disks. In some examples, machine-readable media are non-transitory machine readable media. In particular, in some examples, machine-readable media are media other than transitory propagating signals.

The instructions 424 may further be transmitted or received over a communications network 426 using a transmission medium via the network interface device 420. The machine 400 may communicate with one or more other machines utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 420 may include one or more physical jacks (e.g., Ethernet, coaxial, or phone jacks) or one or more antennas to connect to the communications network 426. In an example, the network interface device 420 may include a plurality of antennas to wirelessly communicate using at least one of single-input multiple-output (SIMO), multiple-input multiple-output (MIMO), or multiple-input single-output (MISO) techniques. In some examples, the network interface device 420 may wirelessly communicate using Multiple User MIMO techniques.

Examples, as described herein, may include, or may operate on, logic or a number of components, modules, or mechanisms (all referred to hereinafter as "modules"). Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

## Claims

1. A method (100) for generating a glare-free image, the method comprising:
acquiring an RGB image (108) of a scene in a visible wavelength range; and
acquiring an infrared, IR, image (130) of the scene in an IR wavelength range;
**characterized in that** it further comprises:
transforming (110) the RGB image (108) to a YUV image (112);
based on a luminance component (104) of the YUV image (112), identifying (122) a glare region (124) in the YUV image (112);
identifying (128), in the IR image (130), a corresponding region to the glare region (124) in the YUV image (112); and
substituting (132), in the luminance component (114) of the YUV image (112), pixel values in the glare region (124) with pixel values of the corresponding region (126) in the IR image (130).

2. The method of claim 1, further comprising:
adjusting, in a chrominance component (115 or 116) of the YUV image (112), pixel values in the glare region (124) based on pixel values in a region surrounding the glare region (124).

3. The method of claim 1, wherein identifying the glare region (124) based on the luminance component (114) of the YUV image (112) comprises generating a binary bit map (204) indicating for each pixel in the YUV image whether it is a glare pixel.

4. The method of claim 3, wherein the bitmap (204) is generated with a convolutional neural network, CNN model.

5. The method of claim 3, wherein identifying the corresponding region (126) in the IR image (130) comprises multiplying (206) the IR image (130) with the binary bit map (204) to create a first intermediate image (208).

6. The method of claim 5, wherein substituting the pixel values in the glare region (124) in the luminance component (114) of the YUV image (112) with the pixel values of the corresponding region (126) in the IR image (130) comprises multiplying (214) the luminance component (114) of the YUV image (112) with a complement (212) of the binary bit map (204) to create a second intermediate image (216), and adding (218) the first and second intermediate images (208, 216) to create the glare-free image.

7. The method (100) of claim 1, wherein the RGB image (108) is a frame of a first video stream captured with an RGB camera (102) and the IR image (130) is a synchronous frame of a second video stream captured with an IR camera (104).

8. The method (100) of claim 7, further comprising generating glare-free images from additional synchronous frames of the first and second video streams in real time.

9. The method (100) of claim 1, further comprising displaying the glare-free image on a display device (136; 330).

10. A system (300) for generating a glare-free image, comprising:
one or more hardware processors for processing an RGB (108) image of a scene in a visible wavelength range in conjunction with an infrared IR image (130) of the scene in an IR wavelength range by performing operations **characterized in that** said operations comprise:
transforming the RGB image (108) to a YUV image (112);
based on a luminance component (114) of the YUV image (112), identifying a glare region (124) in the YUV image (112);
identifying, in the IR image (130), a corresponding region (126) to the glare region (124) in the YUV image (112); and
substituting, in the luminance component (114) of the YUV image (112), pixel values in the glare region (124) with pixel values of the corresponding region (126) in the IR image (130).

11. The system (300) of claim 10, further comprising:
an RGB camera (102) configured to acquire the RGB image (108); and
an IR camera (104) configured to acquire the IR image (130).

12. The system (300) of claim 10, wherein the one or more hardware processors comprise one or more general-purpose processors configured by instructions stored in memory to perform the operations.

13. The system (300) of claim 12, wherein the instructions are part of a user space driver (314) associated with the RGB and IR cameras (102, 104) and executed within a user space (316) of an operating system.

14. The system (300) of claim 10, wherein the one or more hardware processors comprise a hardware-implemented image signal processor associated with a RGB and IR cameras (102, 104) configured to acquire the RGB and IR images.

15. One or more machine-readable media storing processor-executable instructions for processing pairs of synchronously acquired YUV and IR images (112, 130) to generate a glare-free image, **characterized in that** the instructions, when executed by a hardware processor, causethe hardware processor to perform operations comprising:
based on a luminance component (114) of the YUV image (112), identifying a glare region (124) in the YUV image (112);
identifying, in the IR image (130), a corresponding region (126) to the glare region in the YUV image (112); and
substituting, in the luminance component (114) of the YUV image (112), pixel values in the glare region (124) with pixel values of the corresponding region (126) in the IR image (130).

## Patentansprüche

1. Verfahren (100) zum Erzeugen eines blendungsfreien Bildes, wobei das Verfahren umfasst:
Erfassen eines RGB-Bildes (108) einer Szene in einem sichtbaren Wellenlängenbereich; und
Erfassen eines Infrarot, IR, -Bildes (130), der Szene in einem IR-Wellenlängenbereich;
**dadurch gekennzeichnet, dass** es ferner Folgendes umfasst:
Umwandeln (110) des RGB-Bildes (108) in ein YUV-Bild (112);
basierend auf einer Luminanzkomponente (104) des YUV-Bildes (112), Identifizieren (122) eines Blendungsbereichs (124) in dem YUV-Bild (112);
Identifizieren (128) eines dem Blendungsbereich (124) in dem YUV-Bild (112) entsprechenden Bereichs in dem IR-Bild (130); und
Ersetzen (132) von Pixelwerten in dem Blendungsbereich (124) in der Luminanzkomponente (114) des YUV-Bildes (112) durch Pixelwerte des entsprechenden Bereichs (126) in dem IR-Bild (130).

2. Verfahren nach Anspruch 1, ferner umfassend:
Anpassen von Pixelwerten in dem Blendungsbereich (124) in einer Chrominanzkomponente (115 oder 116) des YUV-Bildes (112) basierend auf Pixelwerten in einem den Blendungsbereich (124) umgebenden Bereich.

3. Verfahren nach Anspruch 1, wobei das Identifizieren des Blendungsbereichs (124) basierend auf der Luminanzkomponente (114) des YUV-Bildes (112) das Erzeugen einer binären Bitmap (204) umfasst, die für jedes Pixel in dem YUV-Bild anzeigt, ob es ein Blendungspixel ist.

4. Verfahren nach Anspruch 3, wobei die Bitmap (204) mit einem Faltungsneuronalen Netzwerk, CNN-Modell, erzeugt wird.

5. Verfahren nach Anspruch 3, wobei das Identifizieren des entsprechenden Bereichs (126) im IR-Bild (130) das Multiplizieren (206) des IR-Bildes (130) mit der binären Bitmap (204) umfasst, um ein erstes Zwischenbild (208) zu erzeugen.

6. Verfahren nach Anspruch 5, wobei das Ersetzen der Pixelwerte im Blendungsbereich (124) in der Luminanzkomponente (114) des YUV-Bildes (112) durch die Pixelwerte des entsprechenden Bereichs (126) im IR-Bild (130) das Multiplizieren (214) der Luminanzkomponente (114) des YUV-Bildes (112) mit einem Komplement (212) der binären Bitmap (204), um ein zweites Zwischenbild (216) zu erzeugen, und das Addieren (218) des ersten und des zweiten Zwischenbildes (208, 216) umfasst, um das blendungsfreie Bild zu erzeugen.

7. Verfahren (100) nach Anspruch 1, wobei das RGB-Bild (108) ein Rahmen eines ersten Videostroms ist, der mit einer RGB-Kamera (102) aufgenommen wurde, und das IR-Bild (130) ein synchroner Rahmen eines zweiten Videostroms ist, der mit einer IR-Kamera (104) aufgenommen wurde.

8. Verfahren (100) nach Anspruch 7, ferner umfassend das Erzeugen von blendungsfreien Bildern aus zusätzlichen synchronen Bildern des ersten und zweiten Videostroms in Echtzeit.

9. Verfahren (100) nach Anspruch 1, ferner umfassend das Anzeigen des blendungsfreien Bildes auf einer Anzeigevorrichtung (136; 330).

10. System (300) zum Erzeugen eines blendungsfreien Bildes, umfassend:
einen oder mehrere Hardwareprozessoren zum Verarbeiten eines RGB-Bildes (108) einer Szene in einem sichtbaren Wellenlängenbereich in Verbindung mit einem Infrarot-IR-Bild (130) der Szene in einem IR-Wellenlängenbereich durch Ausführen von Operationen, **dadurch gekennzeichnet, dass** die Operationen Folgendes umfassen:
Umwandeln des RGB-Bildes (108) in ein YUV-Bild (112);
basierend auf einer Luminanzkomponente (114) des YUV-Bildes (112), Identifizieren eines Blendungsbereichs (124) in dem YUV-Bild (112);
Identifizieren eines dem Blendungsbereich (124) in dem YUV-Bild (112) entsprechenden Bereichs (126) in dem IR-Bild (130); und
Ersetzen von Pixelwerten in dem Blendungsbereich (124) in der Luminanzkomponente (114) des YUV-Bildes (112) durch Pixelwerte des entsprechenden Bereichs (126) in dem IR-Bild (130).

11. System (300) nach Anspruch 10, ferner umfassend:
eine RGB-Kamera (102), die so konfiguriert ist, dass sie das RGB-Bild (108) erfasst; und
eine IR-Kamera (104), die so konfiguriert ist, dass sie das IR-Bild (130) erfasst.

12. System (300) nach Anspruch 10, wobei der eine oder die mehreren Hardwareprozessoren einen oder mehrere Mehrzweckprozessoren umfassen, die durch im Speicher gespeicherte Anweisungen konfiguriert sind, um die Operationen durchzuführen.

13. System (300) nach Anspruch 12, wobei die Anweisungen Teil eines Benutzerraumtreibers (314) sind, der mit den RGB- und IR-Kameras (102, 104) verbunden ist und innerhalb eines Benutzerraums (316) eines Betriebssystems ausgeführt wird.

14. System (300) nach Anspruch 10, wobei der eine oder die mehreren Hardwareprozessoren einen hardwareimplementierten Bildsignalprozessor umfassen, der mit einer RGB- und einer IR-Kamera (102, 104) verbunden ist, die so konfiguriert sind, dass sie die RGB- und IR-Bilder erfassen.

15. Ein oder mehrere maschinenlesbare Medien, die prozessorausführbare Anweisungen zur Verarbeitung von Paaren von synchron erfassten YUV- und IR-Bildern (112, 130) speichern, um ein blendungsfreies Bild zu erzeugen, **dadurch gekennzeichnet, dass** die Anweisungen, wenn sie von einem Hardwareprozessor ausgeführt werden, den Hardwareprozessor veranlassen, Operationen durchzuführen, die Folgendes umfassen:
basierend auf einer Luminanzkomponente (114) des YUV-Bildes (112), Identifizieren eines Blendungsbereichs (124) in dem YUV-Bild (112);
Identifizieren eines dem Blendungsbereich in dem YUV-Bild (112) entsprechenden Bereichs (126) in dem IR-Bild (130); und
Ersetzen von Pixelwerten in dem Blendungsbereich (124) in der Luminanzkomponente (114) des YUV-Bildes (112) durch Pixelwerte des entsprechenden Bereichs (126) in dem IR-Bild (130).

## Revendications

1. Procédé (100) de génération d'une image sans reflets, le procédé comprenant :
l'acquisition d'une image RVB (108) d'une scène dans une plage de longueurs d'onde visibles ; et
l'acquisition d'une image infrarouge, IR, (130) de la scène dans une plage de longueurs d'onde IR ;
**caractérisé en ce qu'**il comprend en outre :
la transformation (110) de l'image RVB (108) en une image YUV (112) ;
en fonction d'une composante de luminance (104) de l'image YUV (112), l'identification (122) d'une zone de reflets (124) dans l'image YUV (112) ;
l'identification (128), dans l'image IR (130), d'une zone correspondant à la zone de reflets (124) dans l'image YUV (112) ; et
le remplacement (132), dans la composante de luminance (114) de l'image YUV (112), de valeurs de pixel dans la zone de reflets (124) par des valeurs de pixel de la zone (126) correspondante dans l'image IR (130).

2. Procédé selon la revendication 1, comprenant en outre :
l'ajustement, dans une composante de chrominance (115 ou 116) de l'image YUV (112), de valeurs de pixel dans la zone de reflets (124) en fonction de valeurs de pixel dans une zone entourant la zone de reflets (124).

3. Procédé selon la revendication 1, dans lequel l'identification de la zone de reflets (124) en fonction de la composante de luminance (114) de l'image YUV (112) comprend la génération d'une mise en correspondance binaire (204) indiquant pour chaque pixel de l'image YUV s'il s'agit d'un pixel de reflet.

4. Procédé selon la revendication 3, dans lequel la mise en correspondance binaire (204) est générée à l'aide d'un modèle de réseau neuronal convolutif, CNN.

5. Procédé selon la revendication 3, dans lequel l'identification de la zone (126) correspondante dans l'image IR (130) comprend la multiplication (206) de l'image IR (130) par la mise en correspondance binaire (204) pour créer une première image intermédiaire (208).

6. Procédé selon la revendication 5, dans lequel la substitution des valeurs de pixel dans la zone de reflets (124) dans la composante de luminance (114) de l'image YUV (112) par les valeurs de pixel de la zone (126) correspondante dans l'image IR (130) comprend la multiplication (214) de la composante de luminance (114) de l'image YUV (112) par un complément (212) de la mise en correspondance binaire (204) pour créer une seconde image intermédiaire (216), et l'ajout (218) des première et seconde images intermédiaires (208, 216) pour créer l'image sans reflets.

7. Procédé (100) selon la revendication 1, dans lequel l'image RVB (108) est une trame d'un premier flux vidéo capturé à l'aide d'une caméra RVB (102) et l'image IR (130) est une trame synchrone d'un second flux vidéo capturé à l'aide d'une caméra IR (104).

8. Procédé (100) selon la revendication 7, comprenant en outre la génération d'images sans reflets à partir de trames synchrones supplémentaires des premier et second flux vidéo en temps réel.

9. Procédé (100) selon la revendication 1, comprenant en outre l'affichage de l'image sans reflets sur un dispositif d'affichage (136 ; 330).

10. Système (300) de génération d'une image sans reflets, comprenant :
un ou plusieurs processeurs matériels permettant de traiter une image RVB (108) d'une scène dans une plage de longueurs d'onde visibles en conjonction avec une image infrarouge, IR, (130) de la scène dans une plage de longueurs d'onde IR par réalisation des opérations, **caractérisé en ce que** lesdites opérations comprennent :
la transformation de l'image RVB (108) en une image YUV (112) ;
en fonction d'une composante de luminance (114) de l'image YUV (112), l'identification d'une zone de reflets (124) dans l'image YUV (112) ;
l'identification, dans l'image IR (130), d'une zone (126) correspondant à la zone de reflets (124) dans l'image YUV (112) ; et
le remplacement, dans la composante de luminance (114) de l'image YUV (112), de valeurs de pixel dans la zone de reflets (124) par des valeurs de pixel de la zone (126) correspondante dans l'image IR (130).

11. Système (300) selon la revendication 10, comprenant en outre :
une caméra RVB (102) configurée pour acquérir l'image RVB (108) ; et
une caméra IR (104) configurée pour acquérir l'image IR (130).

12. Système (300) selon la revendication 10, dans lequel le ou les processeurs matériels comprennent un ou plusieurs processeurs à usage général configurés à l'aide d'instructions stockées en mémoire pour réaliser les opérations.

13. Système (300) selon la revendication 12, dans lequel les instructions font partie d'un pilote d'espace utilisateur (314) associé aux caméras RVB et IR (102, 104) et exécuté dans un espace utilisateur (316) d'un système d'exploitation.

14. Système (300) selon la revendication 10, dans lequel le ou les processeurs matériels comprennent un processeur de signal d'image mis en œuvre par matériel associé à des caméras RVB et IR (102, 104) configuré pour acquérir les images RVB et IR.

15. Au moins un support lisible par machine stockant des instructions exécutables par processeur pour traiter des paires d'images YUV et IR (112, 130) acquises de manière synchrone pour générer une image sans reflets, **caractérisé en ce que** les instructions, lorsqu'elles sont exécutées par un processeur matériel, amènent le processeur matériel à réaliser des opérations comprenant :
en fonction d'une composante de luminance (114) de l'image YUV (112), l'identification d'une zone de reflets (124) dans l'image YUV (112) ;
l'identification, dans l'image IR (130), d'une zone (126) correspondant à la zone de reflets dans l'image YUV (112) ; et
le remplacement, dans la composante de luminance (114) de l'image YUV (112), de valeurs de pixel dans la zone de reflets (124) par des valeurs de pixel de la zone (126) correspondante dans l'image IR (130).
